# EUROPEAN PATENT APPLICATION

(11) **EP 2 916 283 A2**
(43) Date of publication of application: **09.09.2015**
(21) Application number: 15150961.9
(22) Date of filing: 13.01.2015
(51) Int. Cl.: G06Q 30/06

(54) **Display apparatus and control method thereof**

(30) Priority: 28.02.2014 KR 20140024078
(71) Applicant: Samsung Electronics Co., Ltd, Gyeonggi-do 443-742 (KR)
(72) Inventor: Kang, Jin-sung, Gyeonggi-do (KR); Yong, Seok-woo, Seoul (KR)
(74) Representative: Appleyard Lees

(57) **Abstract**

A display apparatus and a control method thereof are provided. The display apparatus includes a communicator configured to perform communication with a content server which provides content, a display configured to display the content, a biometric recognizer configured to recognize biometric information, and a controller configured to control the communicator to transmit password information for purchase of paid content to the content server according to a request for the paid content in response to biometric information of a user matching pre-stored biometric information in a state in which a UI for the purchase of the paid content is displayed. The display apparatus prevents the password information for the purchase of the paid content from being exposed to the outside.

## Description

### CROSS-REFERENCE TO RELATED APPLICATION

This application claims priority from Korean Patent Application No. 10-2014-0024078, filed on February 28, 2014, in the Korean Intellectual Property Office, the disclosure of which is incorporated herein by reference in its entirety.

### BACKGROUND

### 1. Field

Apparatuses and methods consistent with exemplary embodiments relate to a display apparatus and a control method thereof, and more particularly, to a display apparatus for purchase of paid content and a control method thereof.

### 2. Description of the Related Art

In general, to watch paid content among a plurality of pieces of content provided from a content server through a display apparatus, a user inputs password information to purchase paid content, the password being preset by the user using a remote control apparatus such as a remote controller. Thus, the remote control apparatus may transmit the password information input from the user to the display apparatus, and the display apparatus may receive the paid content from the content server according to whether or not preset password information matches the received password information and display the paid content.

In response to the input of the password for the purchase of the paid content being impossible through the remote control apparatus, the display apparatus generates a user interface (UI) configured to guide input of the password information for the purchase of the paid content, and displays the generated UI on a screen. Thus, the user may select numbers corresponding to the preset password information among numbers displayed in the UI displayed on the screen of the display apparatus using a directional key button provided in the remote control apparatus, and input the password information for the purchase of the paid content.

However, in response to inputting the password information for the purchase of the paid content using the UI displayed on the screen of the display apparatus, the password information of the user may be easily exposed to external users.

In particular, in response to the password information for the purchase of the paid content being exposed to minor users, the indiscriminate purchase of the paid content may be made, or the minor users may easily access the adult paid content which may be an inappropriate subject matter.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments are to prevent password information for purchase of corresponding paid content from being exposed to the outside in response to purchasing the paid content through a display apparatus.

According to an aspect of an exemplary embodiment, there is provided a display apparatus. The display apparatus may include a communicator configured to communicate with a content server which provides content, a display configured to display the content, a biometric recognizer configured to recognize biometric information, and a controller configured to control the communicator to transmit a password information for purchase of paid content to the content server according to a request for the paid content in response to biometric information of a user matching pre-stored biometric information when a user interface (UI) for the purchase of the paid content is displayed.

The biometric information may include at least one from among a fingerprint, an iris, and a voice of the user.

The display apparatus may further include a storage configured to store user authorization information including the biometric information of the user and the password information for the purchase of the paid content. The password information may be differently set according to channels which provide pieces of paid content, and matches the biometric information of the user.

The controller may acquire password information corresponding to a paid content-related channel and transmits the acquired password information to the content server in response to the recognized biometric information matching the pre-stored biometric information.

The controller may control the display to display a password UI indicating that the password information for the paid content is input on a screen in response to the password information for the paid content being acquired.

The controller may receive the biometric information of the user from a remote control apparatus through the communicator.

The remote control apparatus may be a terminal apparatus to which input of a password for the purchase of the paid content is impossible.

According to an aspect of an exemplary embodiment, there is provided a control method of a display apparatus. The control method may include displaying a user interface (UI) for a purchase of paid content according to a request command for the paid content; recognizing biometric information; transmitting password information for the purchase of the paid content to a content server in response to the recognized biometric information matching pre-stored biometric information; and receiving the paid content from the content server and displaying the received paid content.

The biometric information may include at least one from among a fingerprint, an iris, and a voice of the user.

The display apparatus may store user authorization information including password information for the purchase of the biometric information of the user and the paid content. The password information may be differently set according to channels which provide pieces of paid content and match the biometric information of the user.

The transmitting may include determining whether or not the recognized biometric information matches the pre-stored biometric information, acquiring password information of a channel which provides the paid content among pre-stored password information in response to the recognized biometric information matching the pre-stored biometric information, and transmitting the acquired password information to the content server.

The transmitting may further include displaying a password UI indicating that the password information for the paid content is input on a screen in response to the password information for the paid content being acquired.

The receiving may include receiving the biometric information of the user through a remote control apparatus.

The remote control apparatus may be a terminal apparatus to which input of a password for the purchase of the paid content is impossible.

According to another exemplary embodiment, there is provided a display apparatus, including a communicator configured to communicate with a content server to provide content to the display apparatus, a biometric recognizer configured to receive biometric information of a user, and a controller configured to receive an input for selecting content from the content server, where content is received according to a determination by the controller that the biometric information or the user matches a preset biometric information associated with selected content.

The display apparatus may further include a display configured to display the content received from the content server.

The biometric recognizer may be integral with a remote control apparatus.

The biometric information from the user may be one from among a fingerprint, an iris, and a voice of the user.

According to another exemplary embodiment, there is provided a method for displaying content, the method including requesting content from a content server, inputting biometric information of a user to a display apparatus, determining if the biometric information of the user matches preset biometric information of the content, and receiving content from the content server if the biometric information of the user matches the preset biometric information.

The display apparatus may receive the biometric information of the user from a remote control apparatus.

The received content may be displayed on a display of the display apparatus.

According to various exemplary embodiments, the display apparatus may prevent password information for purchase of paid content from being exposed to the outside.

Additional aspects and advantages of the exemplary embodiments will be set forth in the detailed description, will be obvious from the detailed description, or may be learned by practicing the exemplary embodiments.

### BRIEF DESCRIPTION OF THE DRAWING FIGURES

The above and/or other aspects will be more apparent by describing in detail exemplary embodiments, with reference to the accompanying drawings, in which:
FIG. 1 is an illustrative view illustrating a purchase of paid content in a general display apparatus;
FIG. 2 is a block diagram illustrating a display apparatus according to an exemplary embodiment;
FIG. 3 is a detailed block diagram of a biometric recognizer which recognizes biometric information of a user according to an exemplary embodiment;
FIG. 4 is an illustrative view illustrating an initial state in connection with a purchase of paid content in a display apparatus according to an exemplary embodiment;
FIG. 5 is an illustrative view illustrating an input of password information based on first biometric information of a user in a display apparatus according to an exemplary embodiment;
FIG. 6 is a second illustrative view illustrating an input of password information based on second biometric information of a user in a display apparatus according to an exemplary embodiment;
FIG. 7 is a third illustrative view illustrating an input of password information based on third biometric information of a user in a display apparatus according to an exemplary embodiment;
FIG. 8 is a fourth illustrative view illustrating an input of password information based on handwriting information of a user in a display apparatus according to an exemplary embodiment;
FIG. 9 is a flowchart illustrating a control method for purchasing paid content in a display apparatus according to an exemplary embodiment; and
FIG. 10 is a flowchart illustrating a method for transmitting password information for a purchase of paid content to a content server based on biometric information of a user in a display apparatus according to an exemplary embodiment.

### DETAILED DESCRIPTION OF THE EXEMPLARY EMBODIMENTS

Hereinafter, exemplary embodiments will be described in more detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

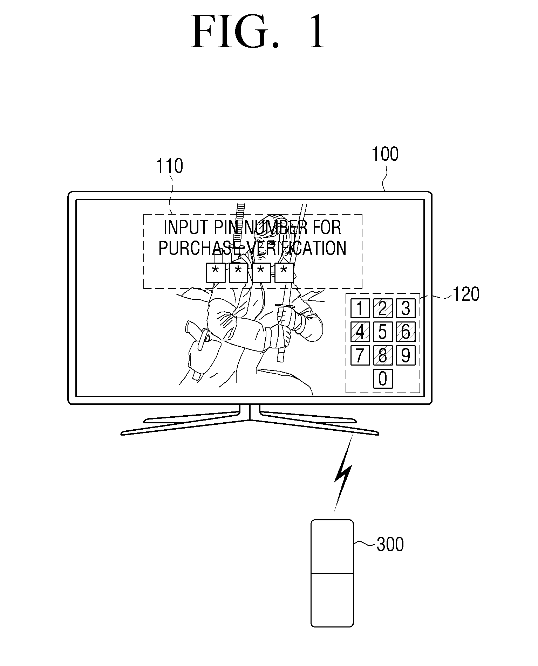

FIG. 1 is an illustrative view illustrating a purchase of paid content in a general display apparatus.

As illustrated in FIG. 1, a display apparatus 100 receives channel information for content requested by a user through a remote control apparatus 300 such as a remote controller. In response to the channel information being received, the display apparatus 100 determines whether the content requested by the user is content provided through a paid channel or content provided through a free channel based on the received channel information. As a result of the determination, in response to the content requested by the user being the content of the paid channel (hereinafter, referred to as 'paid content'), the display apparatus 100 displays a user interface (UI) 110 for purchasing the paid content on a screen. Here, the UI 110 for the purchase of the paid content may include a guidance message such as "Input PIN number for purchase verification", and a password input window configured to guide an input of password information for the purchase of the corresponding paid content.

In response to the UI 110 for the purchase of the paid content being displayed, the user inputs preset password information using a number key button of the remote control apparatus 300. Thus, the remote control apparatus 300 transmits the password information input from the user to the display apparatus 100. In response to the password information being received by the display apparatus 100, the display apparatus 100 displays an arbitrary character in a password input window of the UI 110 for the purchase of the paid content. Therefore, the password information for the purchase of the paid content is displayed in the password input window of the UI 110 for the purchase of the paid content using the arbitrary character such that the corresponding password information is not exposed to the outside, and the user may check that all the preset password information is input.

In response to the number key button being not included in the remote control apparatus 300, the input of the password information for the purchase of the paid content by the user through the remote control apparatus 300 may be impossible. If the number key button is not included, the remote control apparatus 300 may transmit a user command related to the input of the password information to the display apparatus 100 through the remote control apparatus 300. According to the user command, the display apparatus 100 generates a guide UI 120 configured to guide the input of the password information for the purchase of the paid content, and displays the guide UI 120 in one side of the screen.

In response to the guide UI 120 being displayed on the screen, the user may select a number corresponding to the preset password information among numbers of 0 (zero) to 9 displayed on the guide UI 120 using the directional key button provided in the remote control apparatus 300, and input the password information for the purchase of the paid content. Therefore, in response to the password information for the purchase of the paid content being input using the guide UI 120 displayed on the screen of the display apparatus 100, the password information of the user may be exposed to external users.

In particular, the password information for the purchase of the paid content may be exposed to minor users, allowing the indiscriminate purchase of the paid content to be made or the minor users may easily access adult paid content which is not an available subject.

Until now, the operation of purchasing the paid content in the general display apparatus 100 has been described in detail. Hereinafter, an operation and method of purchasing paid content in a display apparatus 200 according to an exemplary embodiment will be described in detail.

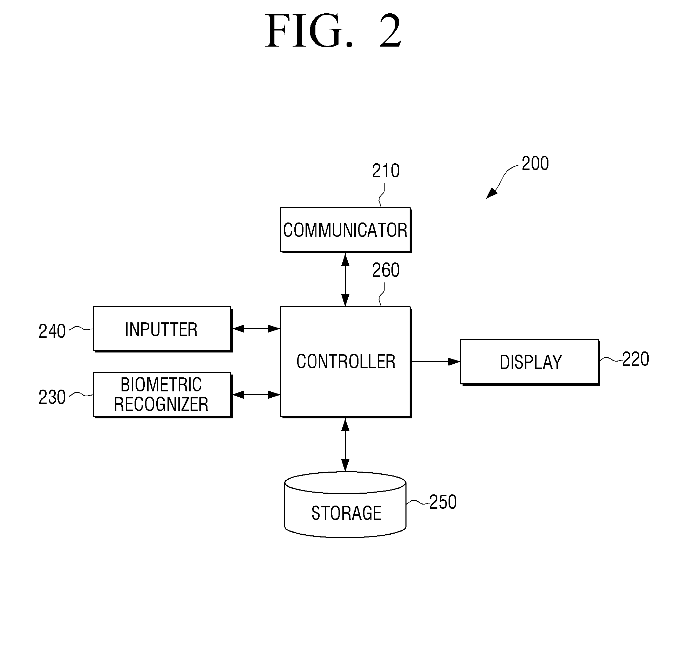

FIG. 2 is a block diagram illustrating a display apparatus according to an exemplary embodiment.

As illustrated in FIG. 2, a display apparatus 200 according to an exemplary embodiment is an electronic apparatus such as a smart television (TV) or a smart phone, the display apparatus 200 including a communicator 210, a display 220, a biometric recognizer 230, an inputter 240, a storage 250, and a controller 260.

The communicator 210 may perform communication with a content server (not shown) which provides content in a wired manner or a wireless manner, and receive content required by a user. Further, the communicator 210 may receive broadcasting content such as terrestrial broadcasting or cable broadcasting from a channel selected through a tuner. That is, the communicator 210 may receive video on demand (VOD)-related content from the content server through a channel requested by the user among a plurality of channels or receive broadcasting-related content through terrestrial broadcasting or cable broadcasting.

The display 220 displays various types of data processed according to a control command of the controller 260 and the content received through the communicator 210 on the screen. The display unit 220 may be implemented with a liquid crystal display (LCD), an organic light emitting diode (OLED), a plasma display panel (PDP), or the like. Further, the display 220 may be implemented in a form of a touch screen (not shown) which receives a touch command of the user. At this time, the display 220 may display the various types of data processed according to the control command of the controller 260 and the received content on the screen, and further receive a touch command of the user through the touch screen.

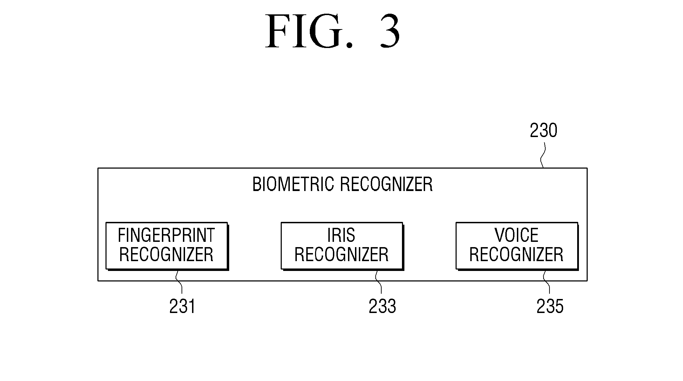

The biometric recognizer 230 recognizes biometric information of the user. Here, the biometric information may include at least one from among a fingerprint, an iris, and a voice of the user. The biometric recognizer 230 which recognizes the biometric information including at least one from among the fingerprint, the iris, and the voice may be configured as illustrated in FIG. 3.

FIG. 3 is a detailed block diagram illustrating a biometric recognizer which recognizes biometric information of a user according to an exemplary embodiment.

As illustrated in FIG. 3, the biometric recognizer 230 may include a fingerprint recognizer 231, an iris recognizer 233 configured to recognize an iris of the user, and a voice recognizer 235 configured to recognize voice of the user.

In some embodiments, the fingerprint recognizer 231 configured to recognize the fingerprint of the user may irradiate a fingerprint input window (not shown) touched by a finger of the user with external light, generate a fingerprint image for a fingerprint formed in the corresponding finger from the finger of the user touched to the fingerprint input window, and recognize the fingerprint of the user. However, exemplary embodiments are not limited thereto, and the fingerprint recognizer 231 may recognize the fingerprint of the user using known various fingerprint recognition algorithms.

In some embodiments, the iris recognizer 233 configured to recognize the iris of the user may detect an eye location of the user from an infrared facial image captured through a camera (not shown), extract a region corresponding to the iris based on the detected eye location, and acquire an iris image of the user. However, exemplary embodiments are not limited thereto, and the iris recognizer 233 may recognize the iris of the user using known iris recognition algorithms.

In some embodiments, in response to an uttered voice of the user being received through a microphone (not shown), the voice recognizer 235 configured to receive the uttered voice of the user may sample an analog voice signal for the received uttered voice, convert the sampled analog voice signal into a digital signal, and generate voice pattern information for the uttered voice of the user. In addition, the voice recognizer 235 may convert the voice signal for the uttered voice of the user, which is converted into the digital signal, into a text form using a speech to text (STT) algorithm. However, exemplary embodiments are not limited thereto, and the voice recognizer 235 may recognize the uttered voice of the user using known various voice recognition algorithms.

The inputter 240 receives a user command from an input unit such as an operation unit (not shown) or a touch panel (not shown) provided in the display apparatus 200. In particular, the inputter 240 may receive a content request command for content to be watched by the user through the inputter, such as the operation unit or the touch panel.

The storage 250 stores user authorization information including the biometric information of the user and the password information for a purchase of paid content. Here, the password information may be differently set according to channels which provide pieces of paid content and match the biometric information of the user. In some embodiments, in response to a first channel providing first paid content, the biometric information for the fingerprint of the user and a first preset password in connection with the first channel may be matched. In response to a second channel providing second paid content, the biometric information for the fingerprint of the user and a second preset password in connection with the second channel may be matched.

However, exemplary embodiments are not limited thereto, and the storage 250 may include user authorization information in which the biometric information and the password information are differently matched according to channels which provide pieces of paid content. In some embodiments, in response to a first channel providing first paid content, the biometric information for the fingerprint of the user and a first password preset in connection with the first channel may be matched. In response to a second channel providing second paid content, the biometric information for the iris of the user and a second password preset in connection with the second channel may be matched.

The storage 250 stores the user authorization information including the biometric information of the user and the password information for the purchase of the paid content., In addition, the storage 250 stores various application programs which perform an operation of the display apparatus 200 using an operating system configured to control the operation of the display apparatus 200 and a resource of the operating system, and provide Uls. Further, the storage 250 may store various types of multimedia data which are processed according to a control command of the controller 260, content data, and data received from external apparatuses (not shown). The storage 250 may be implemented by at least one from among a read only memory (ROM), a random access memory (RAM), a memory card detachable from/attachable to the display apparatus 200 (for example, a secure digital (SD) card or a memory stick), a nonvolatile memory, a volatile memory, a hard disc drive (HDD), and a solid state drive (SSD).

The controller 260 controls an overall operation of each component constituting the display apparatus 200. In particular, in response to a content request command being received from the remote control apparatus 300 described in FIG. 1 through the communicator 210, the controller 260 receives content requested by the user from a content server (not shown) or a broadcasting station based on the content request command, and displays the content on the screen through the display 220. However, exemplary embodiments are not limited thereto, and the content request command of the user may be input through the inputter 240.

In response to the content request command being a request command for paid content, the controller 260 generates a UI for purchasing the paid content, and displays the generated UI on the screen through the display 220. In some embodiments, the controller 260 may determine whether or not content related to the previously received content request command corresponds to the paid content based on meta data related to content pre-stored in the storage 250, and may generate the UI for the purchase of the paid content and display the generated UI on the screen through the display 220 in response to the corresponding content being the paid content.

In other embodiments, in response to the content request command being received, the controller 260 requests the corresponding content to a content server (not shown) which provides the content requested by the user based on the received content request command. According to the request, the content server determines whether or not the content requested by the user is the paid content, and transmits result information for the content to the display apparatus 200 in response to the content requested by the user being the paid content. In response to the result information being received, the controller 260 may generate the UI for the purchase of the paid content, and display the generated UI on the screen through the display 220.

In response to password information being input from the user in a state in which the UI for the purchase of the paid content is displayed on the screen, the remote control apparatus 300 including the number key button transmits the input password information to the display apparatus 200. In response to the password information being received from the remote control apparatus 300, the controller 260 transmits the pre-received password information to a content server (not shown) through the communicator 210. However, exemplary embodiments are not limited thereto, and the controller 260 may receive the password information for the purchase of the paid content from the user through the inputter 240.

In response to the biometric information of the user being recognized through the biometric recognizer 230 in a state in which the UI for the purchase of the paid content is displayed on the screen, the controller 260 determines whether or not the recognized biometric information matches the biometric information pre-stored in the storage 250. As a result of the determination that two pieces of biometric information are matched, the controller 260 transmits the pre-stored password information in connection with the purchase of the paid content to a content server (not shown) through the communicator 210.

Specifically, in response to the biometric information of the user being recognized through the biometric recognizer 230 when the UI for the purchase of the paid content is displayed on the screen, the controller 260 may determine whether or not the biometric information of the user recognized through the biometric recognizer 230 matches the biometric information included in the user authorization information corresponding to the user authorization information pre-stored in the storage 250. However, exemplary embodiments are not limited thereto, and the controller 260 may determine whether or not the biometric information of the user received from the remote control apparatus 300 through the communicator 210 matches the biometric information included in the user authorization information when the UI for the purchase of the paid content is displayed on the screen. According to one exemplary embodiment, the remote control apparatus 300 may be a terminal apparatus to which the input of the password for the purchase of the paid content is impossible. That is, the remote control apparatus 300 may be a terminal apparatus in which a number key button for inputting the password information in connection with the purchase of the paid content is not provided.

In some exemplary embodiments, the controller 260 may determine whether or not the recognized biometric information of the user matches the biometric information included in the user authorization information using a predefined pattern algorithm. As a result of the determination that two pieces of biometric information are matched, the controller 260 may acquire password information corresponding to a channel related to the paid content requested by the user, and transmit the acquired password information to a content server (not shown) which provides the corresponding paid content.

In response to the password information for the paid content being acquired, the controller 260 controls the display 220 to generate a password UI indicating that the password information for the paid content has been input, and display the generated password UI on the screen. Thus, the display 220 displays the password UI, in which an arbitrary character in connection with the input of the password information is displayed, in one region of the screen. Therefore, the user may check that all the password information has been input through the password UI displayed on the screen.

Further, a content server (not shown) which receives the password information for the purchase of the paid content from the display apparatus 200 determines whether or not the password information received from the display apparatus 200 matches the pre-stored password information. As a result of the determination that two pieces of password information are matched, the content server processes the purchase approval for the paid content, and transmits the corresponding paid content to the display apparatus 200. Therefore, the controller 260 may display the paid content received from the content server on the screen through the display 220.

Until now, the components of the display apparatus 200 have been described in detail. Hereinafter, an operation of performing a user authorization in connection with the purchase of the paid content requested by the user in the above-described display apparatus 200 will be described in detail.

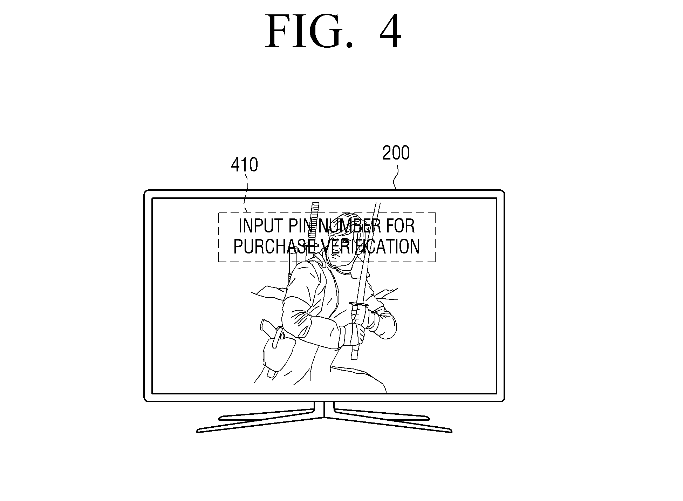

FIG. 4 is an illustrative view illustrating of an initial state of a display apparatus in connection with a purchase of paid content according to an exemplary embodiment.

As illustrated in FIG. 4, the remote control apparatus 300 generates a content request command related to content requested by the user, and transmits the content request command to the display apparatus 200. Here, the remote control apparatus 300 may be a terminal apparatus to which an input of password information in connection with a purchase of paid content is impossible. That is, the remote control apparatus 300 may be a terminal apparatus in which a number key button configured to input the password information in connection with the purchase of the paid content is not provided.

In response to the content request command being received from the remote control apparatus 300, the display apparatus 200 determines whether the content requested by the user is content provided through a paid channel or content provided through a free channel based on the received content request command.

As a result of the determination, if the content requested by the user is the paid content provided from the paid channel, the display apparatus 200 generates a UI 410 for the purchase of the paid content, and displays the generated UI 410 on the screen. Thus, the UI 410, including a guidance message such as "Input PIN number for purchase verification," may be displayed on the screen of the display apparatus 200, and the user may input a password (the PIN number) through the remote control apparatus 300 according to the message of the UI 410.

However, as described above, if the remote control apparatus 300 is a terminal apparatus to which the input of the password information in connection with the purchase of the paid content is impossible, the user may input the password information in connection with the purchase of the paid content using the biometric information of the user.

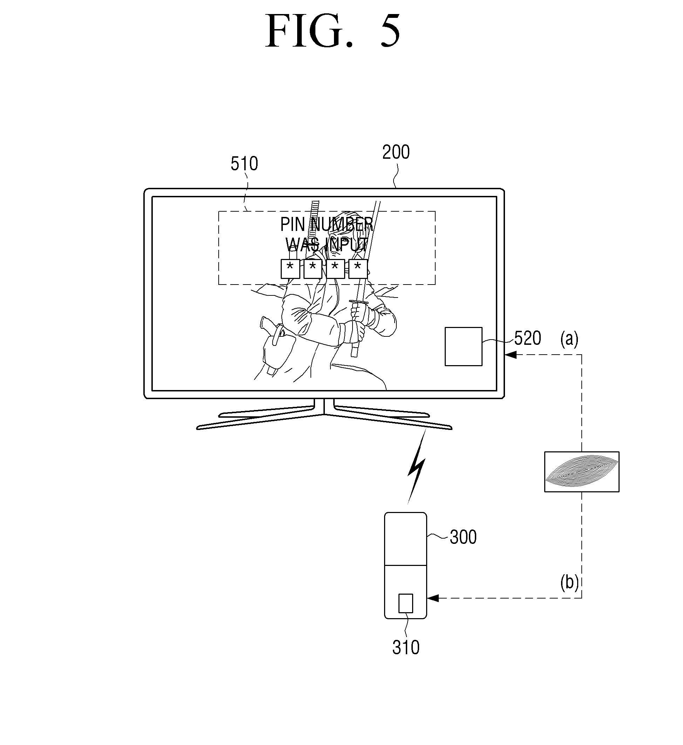

FIG. 5 is an illustrative view illustrating an input of password information based on a first biometric information of a user in a display apparatus according to an exemplary embodiment.

As illustrated in FIG. 5, the display apparatus 200 may acquire password information for a purchase of paid content based on the first biometric information of the user. The first biometric information may be information for a fingerprint of the user.

Specifically, as illustrated in FIG. 5(a), the display apparatus 200 may include a fingerprint input window 520 configured to recognize the fingerprint of the user on one side of a screen. However, the fingerprint input window 520 is not limited to this location, and may be located anywhere on the display apparatus 200. Therefore, the user may touch the fingerprint input window 520 with the finger of the user provided in the display apparatus 200, and the display apparatus 200 may recognize the fingerprint of the user from the finger of the user touched to the fingerprint input window 520, and generate the first biometric information for the recognized fingerprint of the user.

As illustrated in FIG. 5(b), the remote control apparatus 300 may include a fingerprint input window 310 configured to recognize the fingerprint of the user in a body region of the remote control apparatus 300. Therefore, the user may touch the fingerprint input window 310 with the finger of the user provided in the remote control apparatus 300, and the remote control apparatus 300 may recognize the fingerprint of the user from the finger of the user touched to the fingerprint input window 310. In response to the fingerprint being recognized, the remote control apparatus 300 generates the first biometric information for the recognized fingerprint of the user, and transmits the generated first biometric information to the display apparatus 200.

In response to the first biometric information for the fingerprint of the user being generated or being received from the remote control apparatus 300, the display apparatus 200 determines whether or not the first biometric information matches pre-stored biometric information. That is, the display apparatus 200 may determine whether or not the fingerprint of the user which is the first biometric information matches a pattern of the pre-stored fingerprint sample using a predefined fingerprint-related pattern algorithm.

As a result of the determination that the patterns of two fingerprints are matched, the display apparatus 200 acquires preset password information in connection with the purchase of the paid content requested by the user among the password information matched with pre-stored fingerprint samples. In response to the password information being acquired, the display apparatus 200 generates a password UI 510 indicating that the password information for the paid content has been input, and displays the generated password UI 510 on a screen. Thus, the password UI 510 including a guidance message such as "PIN number was input" and a password input window, which includes an arbitrary character related to the pre-acquired password information, is displayed on the screen of the display apparatus 200. Therefore, the user may check that the password information for the purchase of the paid content is input through the password UI 510 displayed on the screen of the display apparatus 200.

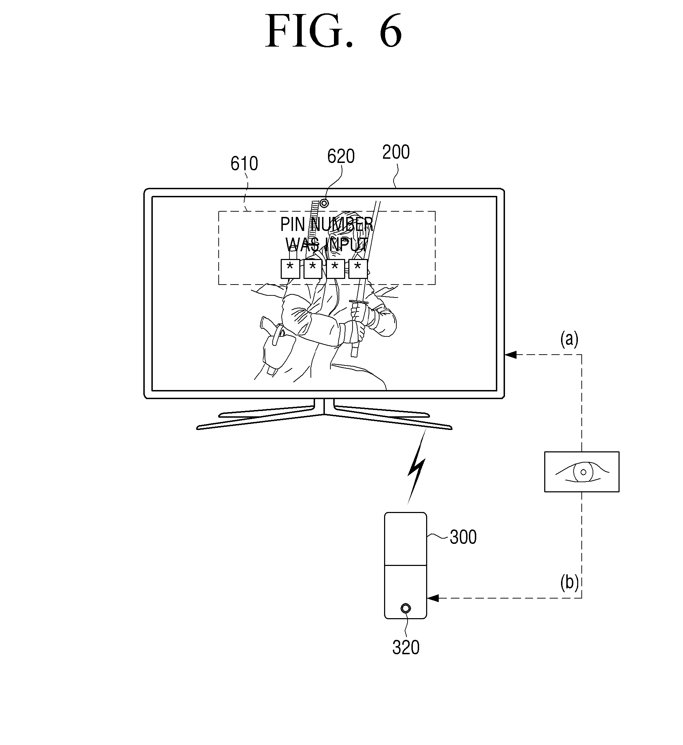

FIG. 6 is a second illustrative view illustrating an input of password information based on a second biometric information of a user in a display apparatus according to an exemplary embodiment.

As illustrated in FIG. 6, the display apparatus 200 may acquire password information for a purchase of paid content based on the second biometric information of the user. The second biometric information may be information for an iris of an eye of the user.

Specifically, as illustrated in FIG. 6(a), the display apparatus 200 may include a camera 620 configured to recognize the iris of the eye of the user in an upper end portion of a screen. However, the camera 620 is not limited to this location, and may be located anywhere on the display apparatus 200. Therefore, the display apparatus 200 may capture the eye of the user through the camera 620, recognize the iris of the user from the captured eye image, and generate the second biometric information for the recognized iris of the user.

As illustrated in FIG. 6(b), the remote control apparatus 300 may include a camera 320 configured to recognize the iris of the eye of the user in a body region of the remote control apparatus 300. Therefore, the remote control apparatus 300 may capture the eye of the user through the camera 320 provided in the body region, and recognize the iris of the user from the captured eye image. In response to the iris of the user being recognized, the remote control apparatus 300 generates the second biometric information for the recognized iris of the user, and transmits the generated second biometric information to the display apparatus 200.

In response to the second biometric information for the iris of the user being generated or being received from the remote control apparatus 300, the display apparatus 200 determines whether or not the second biometric information matches pre-stored biometric information. That is, the display apparatus 200 may determine whether or not the second biometric information matches the pre-stored iris sample using a predefined iris-related pattern algorithm.

As a result of the determination that the two irises are matched, the display apparatus 200 acquires the preset password information in connection with a purchase of the paid content requested by the user among the password information matched with pre-stored iris samples. In response to the password information being acquired, the display apparatus 200 generates a password UI 610 indicating that the password information for the paid content is input, and displays the generated password UI 610 on the screen. Thus, the password UI 610 including a guidance message such as "PIN number was input" and a password input window, which includes an arbitrary character in connection with the pre-acquired password information, is displayed on the screen of the display apparatus 200. Therefore, the user may check that the password information for the purchase of the paid content has been input through the password UI 610 displayed on the screen of the display apparatus 200.

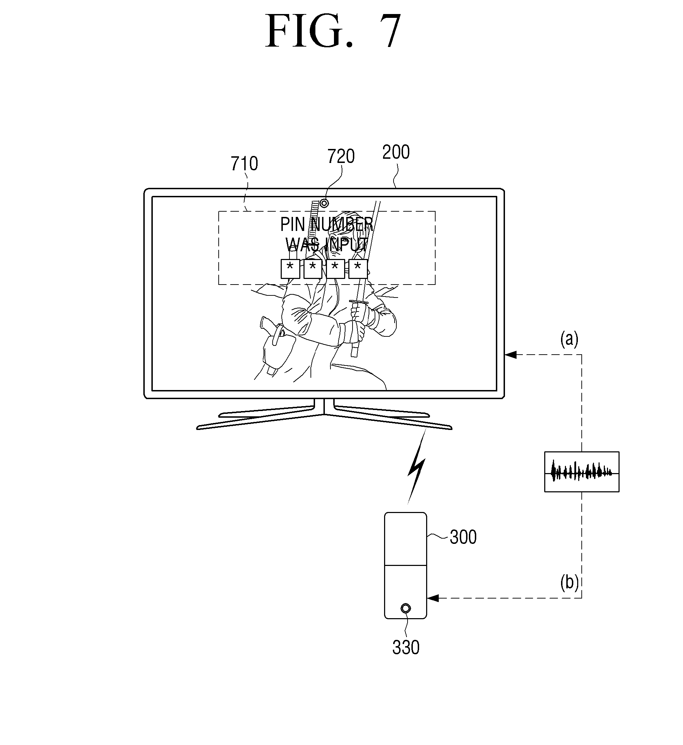

FIG. 7 is a third illustrative view illustrating an input of password information based on a third biometric information of a user in a display apparatus according to an exemplary embodiment.

As illustrated in FIG. 7, the display apparatus 200 may acquire password information for a purchase of paid content based on the third biometric information of the user. The third biometric information may be information for uttered voice of the user.

Specifically, as illustrated in FIG. 7(a), the display apparatus 200 may recognize an uttered voice of the user through a microphone 720 provided in an upper end portion of a screen. However, the microphone 720 is not limited to this location, and may be located anywhere on the display apparatus 200. In response to the uttered voice of the user being recognized, the display apparatus 200 may generate the third biometric information for the uttered voice of the user recognized through the microphone 720.

As illustrated in FIG. 7(b), the remote control apparatus 300 may include a microphone 330 configured to recognize the uttered voice of the user in a body region of the remote control apparatus 300. Therefore, the remote control apparatus 300 may perform voice recognition on the uttered voice of the user input through the microphone 330. In response to the uttered voice of the user being recognized, the remote control apparatus 300 generates the third biometric information for the recognized uttered voice of the user, and transmits the generated third biometric information to the display apparatus 200.

In response to the third biometric information for the uttered voice of the user being generated or being received from the remote control apparatus 300, the display apparatus 200 determines whether or not the third biometric information matches pre-stored biometric information. That is, the display apparatus 200 may determine whether or not the uttered voice of the user which is the third biometric information matches a pattern of a pre-stored voice sample using a predefined voice-related pattern algorithm.

As a result of the determination that the two voice patterns are matched, the display apparatus 200 acquires preset password information in connection with the purchase of the paid content requested by the user among the password information matched with pre-stored voice samples. In response to the password information being acquired, the display apparatus 200 generates a password UI 710 indicating that the password information for the paid content is input, and displays the generated password UI 710 on a screen. Thus, the password UI 710 including a guidance message such as "PIN number was input" and a password input window, which includes an arbitrary character related to pre-acquired password information, is displayed on the screen of the display apparatus 200. Therefore, the user may check that the password information for the purchase of the paid content is input through the password UI 710 displayed on the screen of the display apparatus 200.

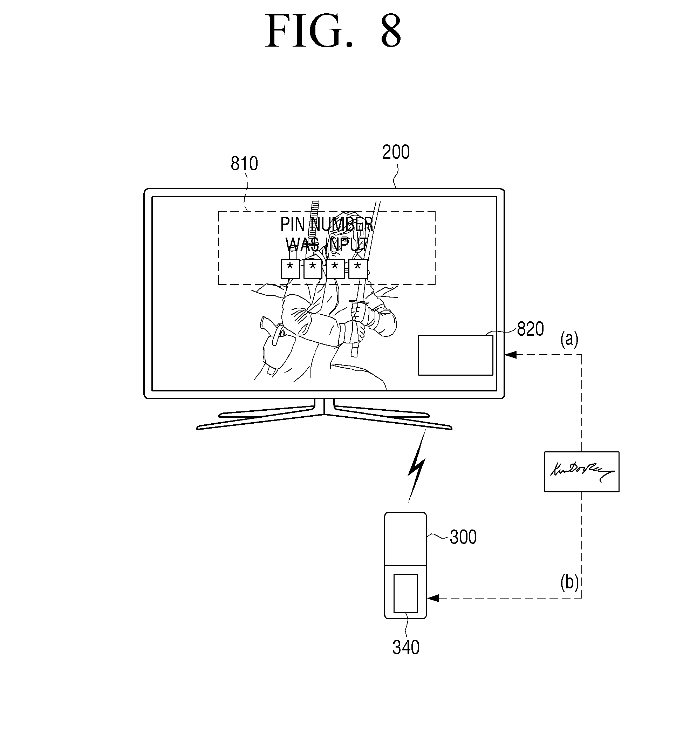

FIG. 8 is a fourth illustrative view illustrating an input of password information based on a handwriting information of a user in a display apparatus according to an exemplary embodiment.

As illustrated in FIG. 8, the display apparatus 200 may acquire password information for purchase of paid content based on the handwriting information of the user. The handwriting information may be information for recognizing a signature handwriting of the user.

Specifically, as illustrated in FIG. 8(a), the display apparatus 200 may include a signature input window 820 configured to recognize the signature handwriting of the user in one side of a screen. However, the signature input window 820 is not limited to this location, and may be located anywhere on the display apparatus 200. Therefore, the user may input a signature of the user to the signature input window 820 provided in the display apparatus 200, and the display apparatus 200 may recognize the signature handwriting of the user from the signature of the user input to the signature input window 820, and generate handwriting information for the recognized signature handwriting.

As illustrated in FIG. 8(b), the remote control apparatus 300 may include a signature input window 340 configured to recognize the signature handwriting of the user in a body region of the remote control apparatus 300. Therefore, the user may input the signature of the user to the signature input window 340 provided in the remote control apparatus 300, and the remote control apparatus 300 may recognize the signature handwriting of the user from the signature of the user input to the signature input window 340. In response to the signature handwriting of the user being recognized, the remote control apparatus 300 generates handwriting information for the recognized signature handwriting of the user, and transmits the generated handwriting information to the display apparatus 200.

In response to the handwriting information for the signature of the user being generated or being received from the remote control apparatus 300, the display apparatus 200 determines whether or not the handwriting information of the user matches a pre-stored handwriting sample. That is, the display apparatus 200 may determine whether or not the handwriting input from the user matches a pattern of the pre-stored handwriting sample using a predefined character pattern algorithm.

As a result of the determination that the patterns of the two handwritings are matched, the display apparatus 200 acquires preset password information in connection with a purchase of the paid content requested by the user among the password information matched with pre-stored handwriting samples. In response to the password information being acquired, the display apparatus 200 generates a password UI 810 indicating that the password information for the paid content is input, and displays the generated password UI 810 on the screen. Thus, the password UI 810 including a guidance message such as "PIN number was input" and a password input window, which includes an arbitrary character related to the pre-acquired password information, is displayed on the screen of the display apparatus 200. Therefore, the user may check that the password information for the purchase of the paid content is input through the password UI 810 displayed on the screen of the display apparatus 200.

Until now, the operations of inputting the password information for the purchase of the paid content from the biometric information of the user in the display apparatus 200 have been described through various exemplary embodiments. Hereinafter, a method of purchasing paid content of a content server (not shown) based on biometric information of a user in the display apparatus 200 according to an exemplary embodiment will be described in detail.

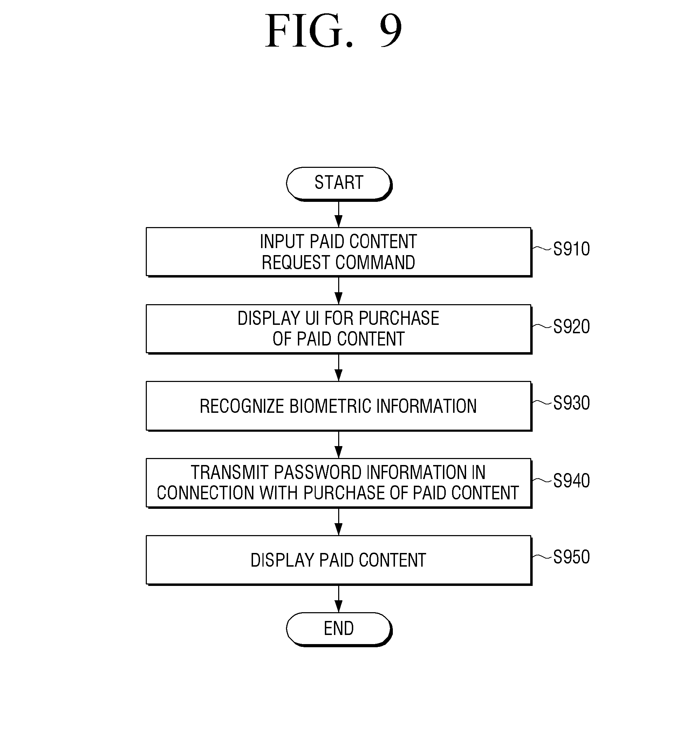

FIG. 9 is a flowchart illustrating a method of controlling a purchase of paid content in a display apparatus according to an exemplary embodiment.

As illustrated in FIG. 9, the display apparatus 200 displays a UI for a purchase of paid content on a screen according to a paid content request command of the user (S910 and S920). The paid content request command of the user may be input through an operation unit or a touch pad provided in the display apparatus 200 or received from the remote control apparatus 300. Here, the remote control apparatus 300 which transmits the paid content request command may be a terminal apparatus to which an input of a password for the purchase of the paid content requested by the user is impossible. That is, the remote control apparatus 300 may be a terminal apparatus in which a number key button configured to input password information in connection with the purchase of the paid content is not provided.

In response to the paid content request command being input or received, the display apparatus 200 displays the UI for the purchase of the corresponding paid content on the screen. In response to biometric information of the user being recognized in a state in which the UI for the purchase of the paid content is displayed on the screen, the display apparatus 200 transmits password information for the purchase of the corresponding paid content to a content server (not shown) which provides paid content according to whether or not the recognized biometric information matches pre-stored biometric information (S930 and S940). The biometric information may include at least one from among a fingerprint, an iris, and a voice of the user.

The content server which receives the password information for the purchase of the paid content from the display apparatus 200 determines whether or not the password information received from the display apparatus 200 matches pre-stored password information. As a result of the determination that two pieces of password information are matched, the content server processes purchase approval for the paid content, and transmits the corresponding paid content to the display apparatus 200. Thus, the display apparatus 200 displays the paid content received from the content server on the screen (S950).

Hereinafter, a method of acquiring password information for a purchase of paid content based on biometric information recognized in the display apparatus 200 and transmitting the password information to a content server (not shown) according to an exemplary embodiment will be described in detail.

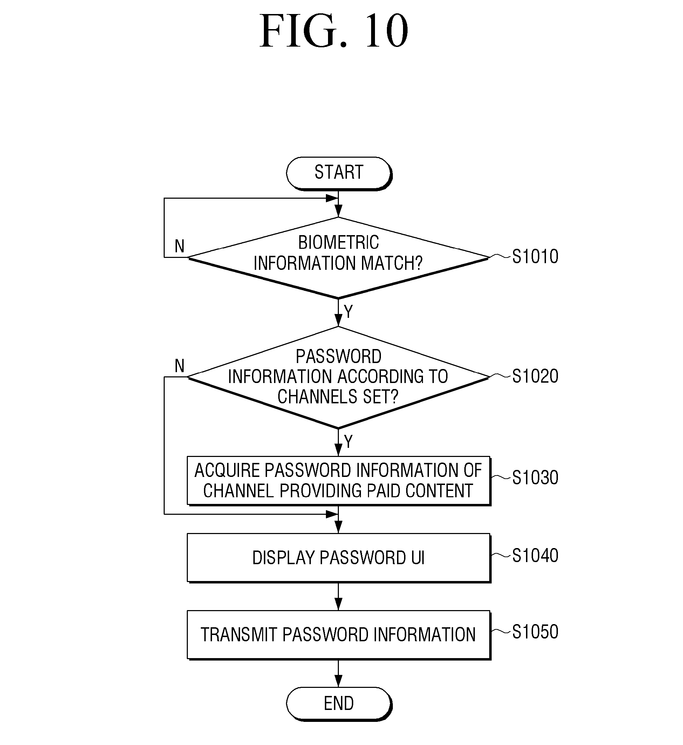

FIG. 10 is a flowchart illustrating a method of transmitting password information for a purchase of paid content to a content server based on biometric information of the user in a display apparatus according to an exemplary embodiment.

As illustrated in FIG. 10, in response to biometric information of the user being recognized in a state in which a UI for the purchase of paid content is displayed on a screen, the display apparatus 200 determines whether or not the recognized biometric information of the user matches biometric information included in pre-stored user authorization information with reference to the pre-stored authorization information (S1010). However, exemplary embodiments are not limited thereto, and the display apparatus 200 may determine whether or not the recognized biometric information of the user matches the biometric information included in the user authorization information with reference to the biometric information of the user received from the remote control apparatus 300 and the pre-stored user authorization information in the state in which the UI for the purchase of the paid content is displayed on the screen. At this time, as described above, the remote control apparatus 300 may be a terminal apparatus in which a number key button configured to input password information in connection with the purchase of paid content is not provided.

As a result of the determination that two pieces of biometric information are matched, the display apparatus 200 determines whether or not password information for the purchase of the paid content is set differently according to channels which provide pieces of paid contents (S1020). Specifically, the display apparatus 200 may store the user authorization information including the biometric information of the user and the password information for the purchase of paid content, and the password information may be set differently according to the channels which the pieces of paid contents are selected according to a user setting command.

Therefore, in response to the pieces of password information for the purchase of the paid content being set differently according to the channels which provides the pieces of paid content, the display apparatus 200 acquires password information of a channel which provides paid content requested by the user among pre-stored password information (S1030). In response to the password information for the purchase of the paid content requested by the user being acquired, the display apparatus 200 generates a password UI indicating that the password information for the corresponding paid content is input, and displays the password UI on a screen (S1040). Thus, the user may check that all the password information is input through the password UI displayed on the screen.

Next, the display apparatus 200 transmits the pre-acquired password information in connection with the purchase of the paid content requested by the user to a content server (not shown) (S1050). Thus, as described above, the content server determines whether or not the password information received from the display apparatus 200 matches pre-stored password information, and transmits the corresponding paid content to the display apparatus 200 in response to two pieces of password information being matched. Therefore, the display apparatus 200 may display the paid content received from the content server on the screen.

Until now, the inventive concept has been described on the basis of exemplary embodiments.

The foregoing exemplary embodiments and advantages are merely exemplary and are not to be construed as limiting the exemplary embodiments. The exemplary embodiments can be readily applied to other types of devices. Also, the description of the exemplary embodiments is intended to be illustrative, and not to limit the scope of the claims, and many alternatives, modifications, and variations will be apparent to those skilled in the art.

In this specification (especially in the claims), the use of the term "the" and similar referential terms may refer to both the singular and the plural. In addition, the steps that compose the method may be performed in appropriate order if the order is not obviously written or if there is no contrary mention. The present exemplary embodiments are not always limited to the order in which the steps are written. The foregoing exemplary embodiments and advantages are merely exemplary and are not to be construed as limiting. Also, the description of the exemplary embodiments is intended to be illustrative, and not to limit the scope of the claims, and many alternatives, modifications, and variations will be apparent to those skilled in the art.

## Claims

1. A display apparatus comprising:
a communicator configured to communicate with a content server which provides content;
a display configured to display the content;
a biometric recognizer configured to recognize biometric information; and
a controller configured to control the communicator to transmit password information for a purchase of paid content to the content server according to a request for the paid content in response to biometric information of a user matching pre-stored biometric information when a user interface (UI) for the purchase of the paid content is displayed.

2. The display apparatus as claimed in claim 1, wherein the biometric information includes at least one from among a fingerprint, an iris, and a voice of the user.

3. The display apparatus as claimed in claim 1 or 2, further comprising:
a storage configured to store user authorization information including the biometric information of the user and the password information for the purchase of the paid content,
wherein the password information is differently set according to channels which provide pieces of paid content, and matches the biometric information of the user.

4. The display apparatus as claimed in claim 3, wherein the controller acquires password information corresponding to a paid content-related channel and transmits the acquired password information to the content server in response to the recognized biometric information matching the pre-stored biometric information.

5. The display apparatus as claimed in claim 4, wherein the controller controls the display to display a password UI indicating that the password information for the paid content is input on a screen in response to the password information for the paid content being acquired.

6. The display apparatus as claimed in claims 1 to 5, wherein the controller receives the biometric information of the user from a remote control apparatus through the communicator.

7. The display apparatus as claimed in claim 6, wherein the remote control apparatus is a terminal apparatus to which input of a password for the purchase of the paid content is impossible.

8. A method of controlling a display apparatus, the method comprising:
displaying a user interface (UI) for a purchase of paid content according to a request command for the paid content;
recognizing biometric information;
transmitting password information for the purchase of the paid content to a content server in response to the recognized biometric information matching pre-stored biometric information; and
receiving the paid content from the content server and displaying the received paid content.

9. The method as claimed in claim 8, wherein the biometric information includes at least one from among a fingerprint, an iris, and a voice of the user.

10. The method as claimed in claim 8 or 9, wherein the display apparatus stores user authorization information including password information for the purchase of the biometric information of the user and the paid content, and the password information is differently set according to channels which provide pieces of paid content and matches the biometric information of the user.

11. The method as claimed in claim 10, wherein the transmitting includes:
determining whether or not the recognized biometric information matches the pre-stored biometric information;
acquiring password information of a channel which provides the paid content among pre-stored password information in response to the recognized biometric information matching the pre-stored biometric information; and
transmitting the acquired password information to the content server.

12. The method as claimed in claim 11, wherein the transmitting further includes displaying a password UI indicating that the password information for the paid content is input on a screen in response to the password information for the paid content being acquired.

13. The method as claimed in claims 8 to 12, wherein the receiving includes receiving the biometric information of the user through a remote control apparatus.

14. The method as claimed in claim 13, wherein the remote control apparatus is a terminal apparatus to which input of a password for the purchase of the paid content is impossible.
